# EUROPEAN PATENT APPLICATION

(11) **EP 1 615 203 A1**
(43) Date of publication of application: **11.01.2006**
(21) Application number: 04076960.6
(22) Date of filing: 07.07.2004
(51) Int. Cl.: G10K 11/02

(54) **Ultrasonic transducer system**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Breeuwer, René, 2623 HP Delft (NL)
(74) Representative: Winckels, Johannes Hubertus F.

(57) **Abstract**

System comprising at least one ultrasonic transducer (3) outside a room like a tube or vessel. The transducer is fit for transmitting and/or receiving an ultrasonic beam (6) into respectively from the interior of said room through the room's wall (2). The system comprises a matching element (5) at the interior's side of the wall, fit for matching the acoustic impedance and/or the sound speed of the wall material (2) and the those of the medium residing (1) within said room. The matching element may be mounted within a cavity in said wall, and may have a shape, at the side of the room, conforming to the room's inside shape. The matching element may have, at the side of the transducer, an arbitrarily curved shape, designed to obtain a certain desired beam directivity and/or to compensate for diffraction effects. The transducer may be mounted under an angle of less than 90 degrees vis-à-vis the room's wall or axis, and the matching element's cross section may have more or less the shape of a wedge.

## Description

### FIELD OF THE INVENTION

The invention refers to a system, comprising at least one ultrasonic transducer outside a room, e.g. a tube or vessel, said transducer being fit for transmitting and/or receiving an ultrasonic beam into respectively from the interior of said room through the room's wall.

### BACKGROUND OF THE INVENTION

In many ultrasonic measuring and characterization applications, access to a medium to be measured or characterized is limited by a solid separating wall. Typical examples are ultrasonic measurement of gas or liquid flow in pipes, liquid characterization or particle detection of fluids in pipes of containment vessels, etc.

It is generally advantageous to mount ultrasonic transducers externally to the relevant vessel or pipe. However, several reasons (for instance integrity, strength, explosion safety or leakage risks) make it undesirable to create passages in pipe or vessel walls. Additionally, for flowing media it is generally undesirable to create any obstructions to the flow in the form of protrusions or cavities on the medium side of the wall.

Generally, it is required to efficiently couple ultrasound through the (pipe or vessel) wall into the medium to be inspected. Further, for most applications the ultrasonic beam must meet stringent requirements.

As an example, ultrasonic time domain flowmeters for measuring a flow in a pipe may employ a number of ultrasonic paths (e.g. comprising a couple transducers) at angles less than 90 degrees with the pipe axis, to determine the volume flow from the difference in travel time between sound propagated upstream and downstream.

Conventionally, to implement such ultrasonic flowmeters, standard plane circular ultrasonic immersion transducers may be mounted in wells, made out of sections of smaller diameter piping and welded at an angle onto the flow pipe. However, such wells have various disadvantages: they distort the flow by causing turbulence and they trap gas bubbles, debris and sediment. Also, they reduce the pressure rating of the pipe section in question and may cause problems in rating the installation explosion-proof. Therefore, in almost all applications, an undistorted cross-section of the pipe and through-wall excitation and detection of the ultrasonic field in the pipe will be preferable.

Unfortunately, through-wall ultrasonic excitation meets with severe technological problems, caused mainly by the very large acoustical contrast between conventional pipe materials (i.e. steel) and typical liquids transported in pipes. Particularly, the contrast in impedance levels (e.g. about 42 × 10⁶ kg/m²s for steel versus 1.5 × 10⁶ kg/m²s for water or oil) causes large energy losses in transmission and poor pulse shapes (ringing). Moreover, the contrast in sound speed (e.g. about 5900 m/s for steel versus 1480 m/s for water or oil) causes large diffraction effects, which are also very sensitive to the exact nature of the transported liquid. These latter effects are compounded because the (concave cylindrical) internal shape of the pipe differs from the plane surface, ideally required to generate a nominally plane (pencil) beam as frequently required specified, and because the ultrasonic beam must propagate at an angle with the pipe axis.

Many older flowmeters employ basic piezoelectric disks, clamped onto the pipe wall or onto a special metallic window by spring pressure. The pulse shapes generated by such arrangements are generally very poor. Later applications employ complete ultrasonic transducers, similar to those used in nondestructive testing or medical applications, consisting of a piezoelectric element, complemented by backing material on the rear and one or more matching layers on the front.

A matching layer may be constituted as a thin layer of material placed on the front surface of an ultrasound transducer to improve the transfer of ultrasound into the medium of propagation. The thickness of the layer may be equal to one fourth the wavelength of the ultrasound in the matching layer (quarter wave matching) and the acoustic impedance about the mean of the impedances on each side of the matching layer.

For applications where transducers, penetrating pipe or vessel walls, are not acceptable, metallic rods (waveguides) or windows may be mounted in the wall, in such a manner that the windows or rods of opposing transducers face each other. Transducers may be bonded to the exterior surfaces of the waveguides or windows. However, the impedance contrast between the interior surface of the window or waveguide and the medium to be inspected still forms a major obstacle. Further, such installations are not flush with the interior surface of the pipe. Finally, it is difficult to obtain arbitrary beam shapes and good pulse shapes.

### SUMMARY OF THE INVENTION

A number of the various disadvantages mentioned above may be solved by the system proposed below.

The proposed system, comprising at least one ultrasonic transducer outside a room, like e.g. a tube or vessel, fit for transmitting and/or receiving an ultrasonic beam into respectively from the interior of the room, through the room's wall, comprises (e.g. per transducer) a matching element at the interior's side of the wall. The matching element at the interior's side of the wall is fit for matching the acoustic impedance and/or the sound speed of the wall material to the acoustic impedance and/or the sound speed of a medium/material -e.g. to be measured or inspected- residing within (e.g. flowing through) said room and/or vice versa, viz. fit for matching the acoustic impedance and/or the sound speed of the material/medium residing within the room to the acoustic impedance and/or the sound speed of the wall material. In this new system the (active, e.g. piezo-electric) ultrasonic transducer and the matching element are distributed on either side of the (e.g. steel) separation wall of the e.g tube or vessel. The matching element, moreover, matches (adapts) the acoustic characteristics of the separation wall and those of the (e.g. water or oil based) material to be measured or inspected, inside the room.

Preferrably, the matching element will be mounted within a cavity in said wall, offering the opportunity to give the matching element a shape, at the side of the room, which is flush with (follows) or conforms to the inside shape of the room or wall. As an alternative, the matching element may comprise a filling element having a shape, at the side of the room, conforming the room's inside shape. In this option, the proper matching element achieves the adaptation (matching) of the acoustic charactistics of the wall material and the inside (flow) material to be be measured or inspected, and the filling element achieves the adaptation (matching, smoothing) of the matching element's shape to the room's inside shape.

By having the inside shape of the matching element (or filling element) to follow or conform to the inside shape of the room or wall, flow distorsion of the inside material to be measured or inspected, turbulences, trap gas bubbles, debris and sediment will be prevented. Also, problems of pressure rating reduction of the room will be solved thanks to an undistorted cross-section of the room.

The matching element may have, at the side of the transducer, an arbitrarily curved shape, designed to obtain a certain desired beam directivity, like e.g. plane, focused, diverging or fan beam. Moreover the arbitrarily curved shape may contribute to compensate for diffraction effects occurring later in the ultrasonic beam passing into the medium to be inspected or measured.

The transducer may be mounted under an angle of less than 90 degrees vis-à-vis the room's wall or axis, and the matching element's cross section may have a more or less wedge shape, which also contributes to shape the desired acoustic beam intensity and/or direction, e.g. enabling co-operation with several other acoustic transducers. E.g. a fan-shaped beam may be especially useful to establish a (broadband) propagation between a single transducer and a group of other transducers.

The matching elements may be made of dedicated acoustic matching materials, e.g. epoxy-based composites, which may be cast or bonded on the inside of the room, in e.g. CNC machined cavities, to serving a triple purpose:
1) to act as a low-impedance acoustic matching material to improve the acoustic energy transfer and pulse shape,
2) to create a surface that is flush or nominally flush with the inner pipe wall (not required for applications without flow) and,
3) because of the low velocity contrast between typical matching layers and process liquids, to reduce diffraction effects and, thus, medium dependency of the beamshape.

Remaining transducer elements may consist basically of a backing, a (plane) piezoelectric element(s), electrical matching elements and possibly a wear plate. They may be mounted as a unit on the outside of the wall, bonded or pressure-coupled to a flat section, which may be raised for optimization by adding a solid external platform. The low acoustic contrast between the pipe material and typical piezoelectric materials allows efficient acoustic coupling while mounting the element external to the wall has the advantages of being able to hot-swap defective transducers, not having to perforate the wall as a pressure boundary, etc. Local wall weakening caused by the preferred (CNC machined) cavity may be compensated by a local increase of the wall thickness outside.

The proposed system has several advantages, retaining the inner shape of the wall, correcting the beam for this shape, and reducing the dependency of the beam diffraction on the exact process liquid or other material to be measured or inspected. It has additional advantages for applications which require special beamshapes (focused, spherically diverging or fan-shaped).

### FIGURES

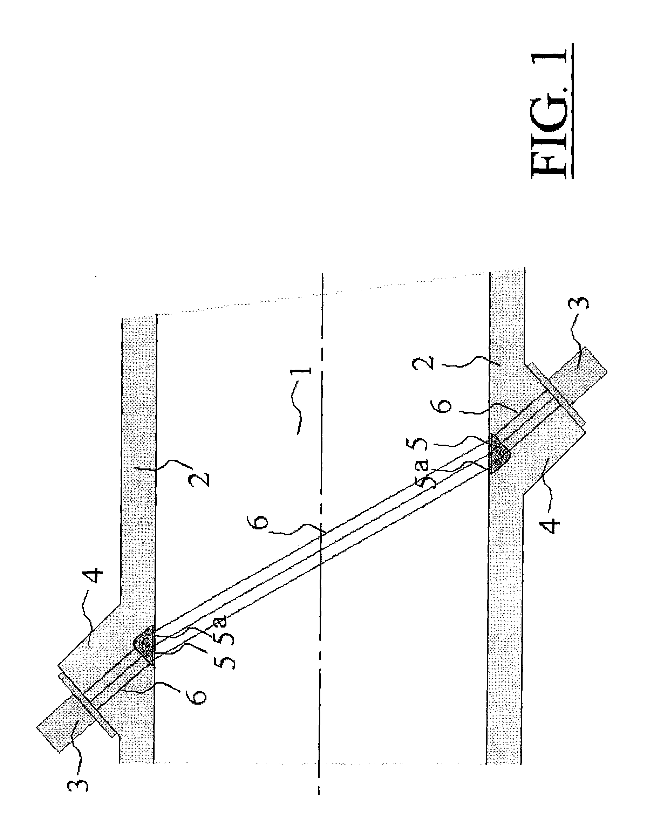

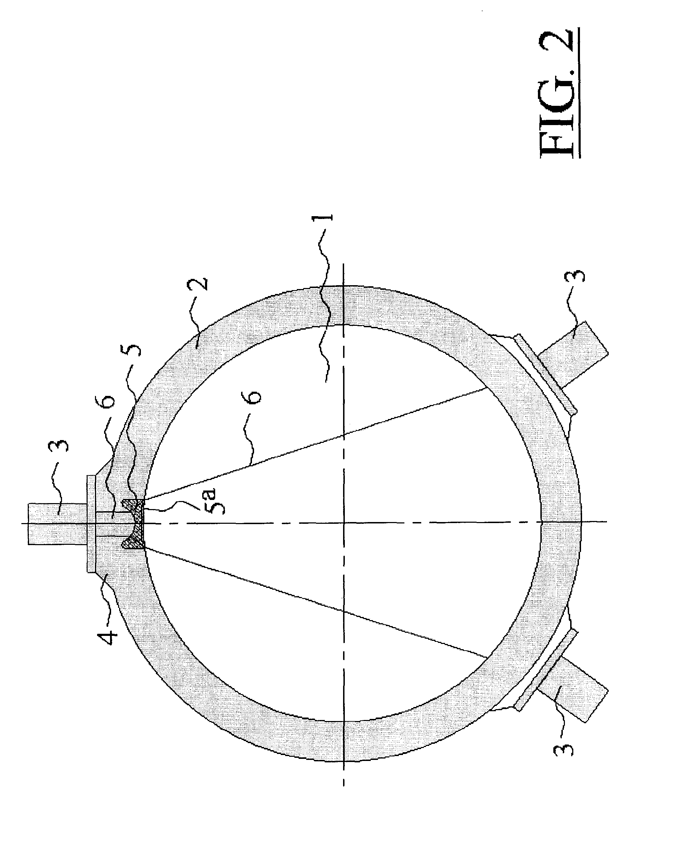

Figures 1 and 2 show an exemplary embodiment of a system discussed above, in two cross-sections.

A medium 1 is flowing through a tube shaped room, confined by walls 2. A couple of piezoelectric transducer elements 3 are mounted on extending mounting platforms 4. The transducers 3 are fit to transmit and/or receive-via the wall 2 and a matching element 5- acoustic beams 6. From the electric values input to and/or output from the relevant transducers 3 the material flowing through the room may be inspected and its characteristic measured.

The matching element 5, at the interior's side of the wall 2, is fit for matching the acoustic impedance and/or the sound speed of the wall material, e.g. made of steel) and the acoustic impedance and/or the sound speed of a material 1 residing within that room. The matching element 5 is mounted within a cavity in said wall 2, e.g. manufactured by means of CNC (Computerized Numerical Control) machining. The matching element 5 has a shape, at the side of the room, which matches (is flush with) the room's inside shape. If desired, e.g. in view of the requested acoustical matching and/or deflection behaviour, the matching element 5 may comprise a filling or shaping element 5a, having a shape, at the side of the room, conforming the room's inside shape and having neutral acoustical characteristics vis-à-vis the flowing medium 1, e.g. made of "rho-c rubber".

The matching element 5 may have, at the side of the transducer, an arbitrarily curved shape, designed to obtain a certain desired beam directivity, e.g. a beam, diverging in one certain plane, which makes it fit to cooperate with a couple of other transducers, as can be seen in figure 2. The arbitrarily curved shape may also be fit to compensate for undesired diffraction effects. As can be seen in figure 2, the arbitrarily curved shape may have the shape of a hollow lense.

When, as can be seen in figure 1, the transducer is mounted under an angle of less than 90 degrees vis-à-vis the room's wall 2 or the (tube or pipe) axis, the matching element's cross section may have more or less the shape of a wedge, by which the matching element 5 has more or less the characteristics of a prisma.

## Claims

1. System comprising at least one ultrasonic transducer (3) outside a room like a tube or vessel, said transducer being fit for transmitting and/or receiving an ultrasonic beam (6) into respectively from the interior of said room through the room's wall (2), the system comprising a matching element (5) at the interior's side of the wall, the matching element being fit for matching the acoustic impedance and/or the sound speed of the wall material (2) and the acoustic impedance and/or the sound speed of a material or medium (1) residing within said room.

2. System according to claim 1, the matching element being mounted within a cavity in said wall.

3. System according to claim 2, the matching element having a shape, at the side of the room, conforming to the room's inside shape.

4. System according to claim 2, the matching element comprising a filling element (5a) having a shape, at the side of the room, conforming to the room's inside shape.

5. System according to claim 1, the matching element having, at the side of the transducer, an arbitrarily curved shape, designed to obtain a certain desired beam directivity.

6. System according to claim 5, the arbitrarily curved shape being fit to compensate for diffraction effects.

7. System according to claim 5, the arbitrarily curved shape having the shape of a hollow lense.

8. System according to claim 1, the transducer being mounted under an angle of less than 90 degrees vis-à-vis the room's wall or axis, and the matching element's cross section having more or less the shape of a wedge.
